**Europäisches Patentamt**

**European Patent Office**

**Office européen des brevets**

(19)

(11) Veröffentlichungsnummer : **0 112 800**
**B1**

# (12) EUROPÄISCHE PATENTSCHRIFT

(45) Veröffentlichungstag der Patentschrift :
07.05.86

(51) Int. Cl.⁴ : **A 01 B 39/08**

(21) Anmeldenummer : **83810561.7**

(22) Anmeldetag : **05.12.83**

(54) **Hackmaschine zum Jäten von Pflanzen.**

(30) Priorität : **17.12.82 CH 7382/82**

(43) Veröffentlichungstag der Anmeldung :
**04.07.84 Patentblatt 84/27**

(45) Bekanntmachung des Hinweises auf die Patenterteilung : **07.05.86 Patentblatt 86/19**

(84) Benannte Vertragsstaaten :
**AT BE DE FR GB IT LU NL SE**

(56) Entgegenhaltungen :
**DE-A- 2 749 474**
**DE-B- 1 195 266**
**FR-A-   548 954**
**GB-A- 2 025 215**
**US-A- 3 968 536**
**US-A- 4 301 646**

(73) Patentinhaber : **Bärtschi & Co. AG.**

**CH-6152 Hüswil (CH)**

(72) Erfinder : **Bärtschi, Peter**
**Spyerfeld**
**CH-6144 Zell (CH)**

(74) Vertreter : **Velgo, Miroslav et al**
**Bovard AG Patentanwälte VSP Optingenstrasse 16**
**CH-3000 Bern 25 (CH)**

Jouve, 18, rue St-Denis, 75001 Paris, France

## Beschreibung

Die Erfindung geht aus von einer Hackmaschine zum Jäten von Pflanzen, die im Front-, Zwischenachs- oder Heckanbau an einem Zugtraktor anbringbar ist, mit einem Parallelogramm, einer Querstange und einer mit der Querstange verbundenen, quer zur Fahrtrichtung des Zugtraktors verlaufenden und vom Zugtraktor hydraulisch oder mechanisch über ein Getriebe angetriebenen Drehachse, auf welcher in Abständen voneinander Borstengruppen vorgesehen sind, wobei der Abstand zwischen zwei benachbarten Borstengruppen der zu jätenden Pflanzenreihe entspricht.

Unkraut, das Gedeihen und schnelles Wachsen von Pflanzen, wie Salat, Spinat oder anderes Gemüse, verhindert, wird auf chemischem oder mechanischem Weg bekämpft. Das Ziel einer solchen Bekämpfung besteht darin, das Unkraut verdorren zu lassen oder sein Wachstum durch Abschlagen oder Beschädigen zurückzuhalten. Dies kommt dem Pflanzensaatgut zugute.

Es ist bekannt, das Unkraut durch Hackschare zu beseitigen. Die Hackscharen werden in den Boden hineingeführt und bei einer langsamen Fahrt eines Zugtraktors (300 bis 400 m/h) wird es möglich, das Unkraut aus der Erde auszupflücken und mit der Erde zu beschütten. Wenn aber die Hackschare auf Hindernisse, wie Steine, Holz, anlaufen, weichen die Hackscharen als Folge des Hindernisses aus der vorgeschlagenen Richtung und machen eine kürzere oder längere Querbewegung. Durch diese Querbewegung wird dann das Pflanzensaatgut beschädigt.

Es ist weiter bekannt, an einen Zugtraktor in Frontanbau, Zwischenachs- oder Heckanbau eine Hackmaschine anzuhängen, die mit Hackmessern und Hackschutzrollen versehen ist. Diese Anordnung von Hackmessern und Hackschutzrollen ist ziemlich kompliziert und ist nicht einfach auf die gewünschte Breite der zu jätenden Pflanzenreihen einstellbar.

In der US-A-4 301 646 ist eine Maschine zum Entblättern von Wurzelgemüse und anderen Feldfrüchten, bevor sie geerntet werden, beschrieben. Sie weist eine Querstange und eine mit der Querstange verbundene, quer zur Fahrtrichtung des Zugtraktors verlaufende und vom Zugtraktor hydraulisch oder mechanisch über ein Getriebe angetriebene Drehachse auf. Auf dieser Drehachse sind in Abständen voneinander Borstengruppen vorgesehen, die jede durch eine aneinandergereihte Borsten aufweisende Rotationsbürste gebildet sind. Die Borsten sind an einem Kabel befestigt und von einem Segeltuch umschlossen. Das eine Ende des Kabels wird in einem Hohlzylinder gehalten, der an einer von zwei die Drehachse umschliessenden Klammern befestigt ist.

Die Befestigung der Borsten ist ziemlich unstabil und kompliziert, was das Auswechseln der abgenützten Borsten erschwert.

Der im Patentanspruch 1 angegebenen Erfindung liegt die Aufgabe zugrunde, eine Hackmaschine zu schaffen, die zum Jäten von verschiedenen Sorten von Pflanzen und insbesondere ihres Saatgutes anwendbar ist. Dies soll wirksam und schnell mit einfachen Mitteln erzielt werden.

Diese Aufgabe wird bei einer Hackmaschine nach dem Oberbegriff des Patentanspruches 1 dadurch gelöst, dass die Borsten in jeweils einer Nabe eingefasst sind, welche Naben auf der Drehachse abnehmbar und verstellbar aufgesetzt sind, und dass jede Rotationsbürste beiderseits mit je einem Stützbleche versehen ist.

Der Erfindungsgegenstand wird nachstehend anhand der Zeichnung beispielsweise näher erläutert. Es zeigen

Figur 1 eine schematische Ansicht der erfindungsgemässen Hackmaschine von hinten,

Figur 2 eine schematische Seitenansicht der Hackmaschine nach der Fig. 1 und

Figur 3 eine Seitenansicht der in der Hackmaschine nach den Fig. 1 und 2 verwendeten Rotationsbürste.

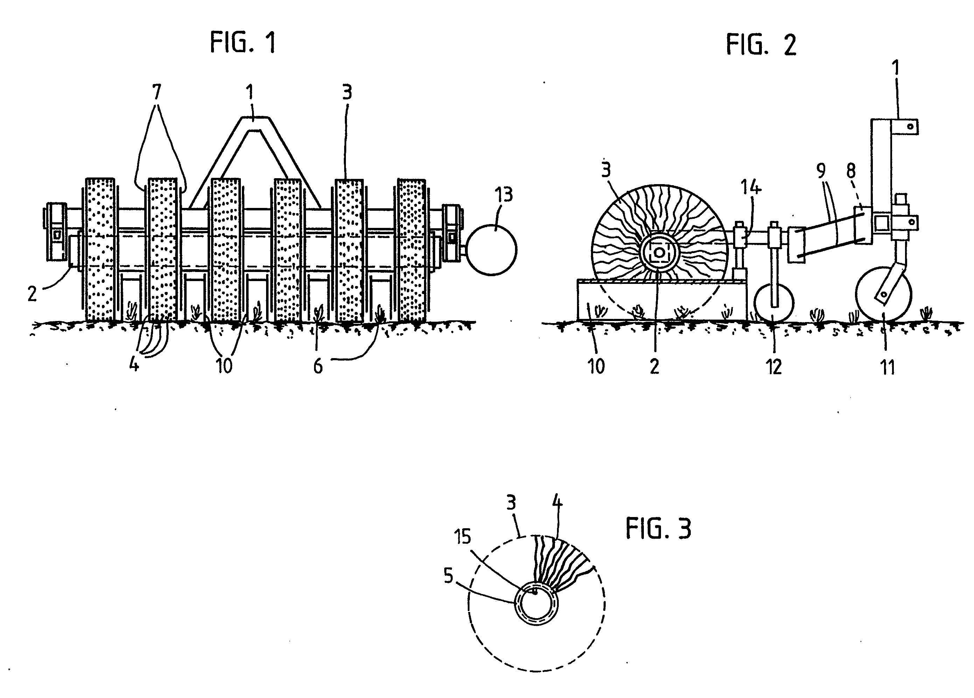

Die in den Fig. 1 und 2 dargestellte Hackmaschine zum Jäten von Pflanzen, insbesondere Gemüse, wie Kopfsalat, Spinat, Radieschen, wird an einem nicht dargestellten Zugtraktor in Dreipunktaufhängung 1 angebracht. Die Hackmaschine kann als Front-, Zwischenachs oder Heckanbau des Zugtraktors verwendet werden. Eine Drehachse 2 ist mit einer Querstange 14 verbunden, die ihrerseits über ein Parallelogram 9 mit der Dreipunktaufhängung 1 in Verbindung steht. Der quer zu Fahrtrichtung des Zugtraktors verlaufenden Drehachse 2 wird vom Zugtraktor Drehbewegung erteilt. Die Drehachse 2 kann vom Zugtraktor hydraulisch oder mechanisch über ein Getriebe angetrieben werden.

Auf der Drehachse 2 sind in Abständen voneinander Rotationsbürsten 3 aufgesetzt. Die abgenützten Rotationsbürsten 3 können von der Drehachse 2 abgenommen und durch neue ausgetauscht werden. Der Abstand zwischen jeweils zwei benachbarten Rotationsbürsten 3 ist verstellbar; er kann der Breite der zu jätenden Pflanzenreihe 6 angepasst werden. Somit laufen die Rotationsbürsten 3 in den Furchen zwischen den einzelnen Pflanzenreihen 6, wo sich das Unkraut am meisten verpflanzt.

Jede Rotationsbürste 3 gemäss der Fig. 3 besteht aus einer Mehrzahl von dicht aneinander gereihten Kunststoffborsten 4. Die einzelnen Kunststoffborsten 4 haben eine Länge von etwa 17 cm. Die Kunststoffborsten 4 sind einerseits von einer auf der Drehachse 2 aufgesetzten Nabe 5 eingefasst. Mit Vorteil bestehen die Kunststoffborsten 4 aus Polypropylen und sind über ihre gesamte Länge wellenförmig gestaltet. Dadurch ergibt sich eine bessere Widerstandskraft der Kunststoffborsten 4 gegen Biegung. Durch Stützbleche 7, die jeweils beidseitig jeder Rotationsbürste 3 oder einer Gruppe von Rotationsbürsten vorgesehen sind, wird das seitliche Ausbrechen der Kunststoffborsten 4 verhindert. Mit 15 ist ein Zapfen an der Nabe 5 bezeichnet, mittels welchem die Rotationsbürste 3 in einer nicht dargestellten Rille der Drehachse gehalten ist.

Die Rotationsbürsten 3 wirken auf den Boden durch Eigengewicht oder diese Wirkung wird durch Federn 8 verstärkt. Der Bedienende der Hackmaschine kann lenkbare Stützrollen 11 durch eine nicht dargestellte Handkurbel verstellen. Mit 12 ist eine Tastrolle zum Abtasten des Saatbeetniveaus bezeichnet. Mit 13 ist ein Antriebsaggregat der Drehachse 2 bezeichnet, das z. B. einen hydraulischen Motor oder einen mechanischen Antrieb mit Winkelgetriebe von der nicht dargestellten Zugtraktorwelle umfassen kann. Die an der Querstange 14 befestigten Blechtunnels 10 schützen die Pflanzenreihen 6 während des Jätens. Sie sind zu den Pflanzenreihen 6 hin offen gestaltet.

Anstelle von Kunststoffborsten können z. B. auch Stahldrähte verwendet werden. Die Polypropylenborsten sind aber wegen des kleinen Abriebes derselben am vorteilhaftesten.

Durch die Rotationsbewegung der Rotationsbürsten und den Druck auf den Boden wird das Unkraut abgeschlagen oder mindestens so beschädigt, dass es gegenüber den Pflanzen in Wachstumrückstand gerät. Die Bürsten können beim Anlaufen an ein Hindernis nur in Senkrichtung ausweichen, so dass das Pflanzensaatgut durch die Bürsten nicht beschädigt wird. Die Umfangsgeschwindigkeit der Rotationsbürsten ist doppelt so gross als die Fahrgeschwindigkeit des Zugtraktors, die etwa 6 bis 8 Stundenkilometer ausmacht. Der Austausch der abgenützten Rotationsbürsten geht schnell vor sich, weil die auf der Drehachse aufgesetzten Rotationsbürsten von der Drehachse einfach abgezogen werden können. Die Rotationsbürsten stellen wirkungsvolle, einfache und vielseitig verwendbare Mittel zur Bekämpfung des Unkrautwachstums dar.

**Patentanspruch**

Hackmaschine zum Jäten von Pflanzen, die im Front-, Zwischenachs- oder Heckanbau an einem Zugtraktor anbringbar ist, mit einem Parallelogramm (9), einer Querstange (14) und einer mit der Querstange (14) verbundenen, quer zur Fahrtrichtung des Zugtraktors verlaufenden und vom Zugtraktor hydraulisch oder mechanisch über ein Getriebe angetriebenen Drehachse (2), auf welcher in Abständen voneinander Borstengruppen vorgesehen sind, wobei der Abstand zwischen zwei benachbarten Borstengruppen der zu jätenden Pflanzenreihe (6) entspricht und jede Borstengruppe durch eine aneinandergereihte Borsten (4) aufweisende Rotationsbürste (3) gebildet ist, dadurch gekennzeichnet, dass die Borsten (4) in jeweils einer Nabe (5) eingefasst sind, welche Naben (5) auf der Drehachse (2) abnehmbar und verstellbar aufgesetzt sind, und dass jede Rotationsbürste (3) beiderseits mit je einem Stützblech (7) versehen ist.

**Claim**

Cultivator for weeding plants, which is attachable to a tractor in front, between-axle, or rear mounting, having a parallelogram (9), a crossbar (14), and a rotary axle (2) connected to the crossbar, running at right angles to the direction of travel of the tractor, and driven hydraulically or mechanically via gearing, upon which rotary axle groups of bristles are provided spaced from one another, the distance between two adjacent groups of bristles corresponding to the rows (6) of plants to be weeded, and each group of bristles being formed by a rotary brush (3) having bristles (4) ranged side by side, characterised in that bristles (4) are respectively bound in a hub (5), wich hubs (5) are mounted removably and adjustably on the rotary axle (2), and that each rotary brush (3) is provided on both sides with one sheetmetal support piece (7) each.

**Revendication**

Bineuse pour le sarclage de plantes, arrimable à l'avant, entre les axes, ou à l'arrière d'un tracteur, avec un parallélogramme (9), une barre transversale (14) et un axe de rotation (2) relié à la barre transversale (14), s'étendant perpendiculairement à la direction de circulation du tracteur, et entraîné par lui hydrauliquement ou mécaniquement par l'intermédiaire d'engrenages, axe sur lequel sont disposés des groupes de brins distants l'un de l'autre, la distance entre deux groupes de brins voisins correspondant à la rangée de plantes à sarcler (6), chaque groupe de brins étant formé par un balai rotatif (3) présentant une suite serrée de brins (4), caractérisée en ce que les brins (4) sont enserrés chacun dans un moyeu (5), ces moyeux étant montés de façon amovible et ajustable sur l'axe de rotation (2), et en ce que chaque balai rotatif (3) est muni des deux côtés d'une tôle de protection (7).

0 112 800

FIG. 1

FIG. 2

FIG. 3